Europäisches Patentamt

European Patent Office

Office européen des brevets

(19)

(11) **EP 1 025 708 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(21) Anmeldenummer: **98959758.8**

(22) Anmeldetag: **22.10.1998**

(51) Int Cl.$^7$: **H04N 7/26**, H04N 7/50

(86) Internationale Anmeldenummer:
**PCT/DE98/03113**

(87) Internationale Veröffentlichungsnummer:
**WO 99/22518 (06.05.1999 Gazette 1999/18)**

(54) **VERFAHREN UND VORRICHTUNG ZUR VERARBEITUNG EINES DIGITALISIERTEN BILDES**

METHOD AND DEVICE FOR PROCESSING A DIGITIZED IMAGE

PROCEDE ET DISPOSITIF POUR LE TRAITEMENT D'UNE IMAGE NUMERIQUE

(84) Benannte Vertragsstaaten:
**DE ES FR GB IT NL SE**

(30) Priorität: **28.10.1997 DE 19747575**

(43) Veröffentlichungstag der Anmeldung:
**09.08.2000 Patentblatt 2000/32**

(73) Patentinhaber: **SIEMENS AKTIENGESELLSCHAFT**
**80333 München (DE)**

(72) Erfinder: **KAUP, André**
**D-85635 Höhenkirchen-Siegertsbrunn (DE)**

(56) Entgegenhaltungen:
**EP-A- 0 593 275      EP-A- 0 635 981**
**EP-A- 0 720 385      EP-A- 0 731 608**
**EP-A- 0 785 689**

**Beschreibung**

Die Erfindung betrifft ein Verfahren und eine Vorrichtung zur Verarbeitung eines digitalisierten Bildes.

Bei der digitalen Übertragung eines Bildes, insbesondere nach vorheriger Bildkompression, also der Reduktion von zu übertragenden Bilddaten, ist der Kanal, über den die Übertragung erfolgt, ein Engpaß (engl.: "bottleneck"). Die Bilddaten werden über diesen Kanal von einem (Bild-)Coder zu eine (Bild-)Decoder übertragen. Die Bandbreite dieses Kanals ist zumeist vorgegeben und konstant, so daß im Coder entsprechend die Kompression auf diese Bandbreite abzustellen ist. Nun kann man gemäß den Möglichkeiten, die standardisierte blockbasierte Bildcodierverfahren, z.B. MPEG-4 oder H.263 (siehe [1]), bereitstellen, den Coder derart voreinstellen bzw. adaptieren, daß die pro Zeiteinheit zu übertragende Anzahl Bilder sichergestellt ist, wobei ein Verlust der Bildqualität in Kauf genommen wird.

Ein Beispiel ist das Bildtelefon, das Bilder darstellt, die über einen ISDN B-Kanal mit einer Übertragungsrate von 64kbit/s übertragen werden und eine dementsprechende Bildqualität aufweisen: Die Bilder ergeben stets eine ruckhafte Bildsequenz mit geringer Auflösung, und die Bilder werden relativ klein dargestellt.

Blockbasierte Bildcodierverfahren (z.B. nach dem MPEG- oder dem H.263-Standard) sind aus [2] bekannt.

Bei der Bildverarbeitung wird die Bildqualität für ein ganzes zu übertragendes Bild festgelegt. Abhängig von der zur Verfügung stehenden Datenrate wird die Bildqualität angepaßt, so daß die Bandbreite ausgenutzt wird und doch das ganze Bild übertragen werden kann. Dabei ist es von Nachteil, daß ein Verlust der Bildqualität für das ganze zu übertragende Bild in Kauf genommen werden muß.

Die beiden Schriften EP 0 720 385 A2 und EP 0 785 689 A2 behandeln jeweils unterschiedliche Methoden der Bildcodierung, die auf bestimmte Bereiche unterschiedliche Bildqualitäten anwendet. Dabei geht es vor allem darum, die Übertragungsrate möglichst effizient zu nutzen dadurch, daß die signifikanten Bildinformationen mit hoher Datenübertragungsrate und letztendlich besserer Bildqualität übertragen werden.

Die Aufgabe der Erfindung besteht darin, ein Verfahren und eine Anordnung zur Bildverarbeitung zu schaffen, wobei der oben beschriebene Nachteil vermieden wird.

Die Aufgabe wird gemäß den Ansprüche 1 und 18 gelöst.

Es wird ein Verfahren zur Bildverarbeitung geschaffen, bei dem ein digitalisiertes Bild in zwei Bereiche unterteilt wird, wobei ein erster Bereich ein vorgegebenes Kriterium erfüllt und ein zweiter Bereich das vorgegebene Kriterium nicht erfüllt. Der erste Bereich wird daraufhin mit einer höheren Bildqualität verarbeitet.

Ein Vorteil besteht demnach darin, daß für den ersten Bereich, so er das vorgegebene Kriterium erfüllt, eine bessere Bildqualität erreicht wird. Es wird erfindungsgemäß somit ermöglicht, den ersten Bereich als Teil des Gesamtbildes mit höherer Qualität elektronisch zu verarbeiten, z.B. zu übertragen oder zu komprimieren.

Eine Weiterbildung der Erfindung besteht darin, das Bild in mehrere Bereiche zu unterteilen, wobei eine Anzahl erster Bereiche, die das Kriterium erfüllen mit einer höheren Bildqualität verarbeitet werden als eine Anzahl zweiter Bereiche, die das Kriterium nicht erfüllen.

Dadurch ist es möglich, zahlreiche Bereiche innerhalb eines Bildes aufzuteilen in mehrere erste und mehrere zweite Bereiche und somit auch nicht zusammenhängenden Bereichen von der Art des ersten Bereiche innerhalb des Bildes eine höhere Bildqualität zuzuordnen.

Ein mögliche Weiterbildung besteht darin, daß das Kriterium erfüllt wird, wenn der erste Bereich des Bildes eine vorgegebene Farbe hat. Dies kann z.B. eine der menschlichen Hautfarbe ähnliche Farbe sein.

Eine zusätzliche Weiterbildung besteht darin, daß das Bild mit einem blockbasierten Bildcodierverfahren verarbeitet wird. Beispiele für blockbasierte Bildcodierverfahren stellen nach dem MPEG-Standard oder nach dem H.263-Standard definierte Bildcodierverfahren dar.

Bei einem blockbasierten Bildcodierverfahren wird für einen Block des Bildes, wobei dieser Block eine vorgegebene Größe aufweist, die Farbe des Blocks in Form zweiter Farbwerte, vorzugsweise durch Mittelung der Bildpunkte dieses Blocks, bestimmt. Es wird eine Vergleichsoperation der zweiten Farbwerte mit den ersten Farbwerten durchgeführt. Ist ein Ergebnis der Vergleichsoperation kleiner als ein vorgegebener Schwellwert, so ist das Kriterium erfüllt, also weist der Block eine zumindest ähnliche Farbe wie die menschliche Haut auf. Ansonsten (also das Ergebnis der Vergleichsoperation ist nicht kleiner als der vorgegebene Schwellwert) ist das Kriterium für diesen Block nicht erfüllt.

Eine zusätzliche Weiterbildung besteht darin, für jeden Block des Bildes das Verfahren iterativ durchzuführen.

Die vorgegebene Größe des Blocks beträgt vorzugsweise 8x8 Bildpunkte oder 16x16 Bildpunkte.

Die Vergleichsoperation kann auf unterschiedliche Art definiert sein. Nachfolgend werden drei Möglichkeiten (siehe Gleichungen (1) bis (3)) dargestellt:

$$|x_Y - h_Y| + |x_{Cr} - h_{Cr}| + |x_{Cb} - h_{Cb}| < S \qquad (1),$$

$$|x_Y - h_Y|^2 + |x_{Cr} - h_{Cr}|^2 + |x_{Cb} - h_{Cb}|^2 < S \qquad (2),$$

$$k_1 \cdot |D_1| + k_2 \cdot |D_2| + k_3 \cdot |D_3| < S, \qquad (3),$$

wobei

$x_Y$       einen Luminanzwert (=Helligkeit) der ersten Farbwerte,

$x_{Cr}$       einen ersten Chrominanzwert (=Farbton) der ersten Farbwerte,

$x_{Cb}$       einen zweiten Chrominanzwert (=Farbsättigung) der ersten Farbwerte,

$h_Y$       einen Luminanzwert (=Helligkeit) der zweiten Farbwerte,

$h_{Cr}$       einen ersten Chrominanzwert (=Farbton) der zweiten Farbwerte,

$h_{Cb}$       einen zweiten Chrominanzwert (=Farbsättigung) der zweiten Farbwerte,

$S$       den vorgegebene Schwellwert,

$k_1, k_2, k_3$       vorgebbare Gewichte,

$D_1$       einen ersten Vergleich des Luminanzwerts der ersten Farbwerte mit einem Luminanzwert der zweiten Farbwerte,

$D_2$       einen zweiten Vergleich eines ersten Chrominanzwerts der ersten Farbwerte mit einem ersten Chrominanzwert der zweiten Farbwerte,

$D_3$       einen dritten Vergleich eines zweiten Chrominanzwerts der ersten Farbwerte mit einem zweiten Chrominanzwert der zweiten Farbwerte

bezeichnen.

Es ist besonders vorteilhaft, daß die drei Größen (Luminanzwert, erster Chrominanzwert, zweiter Chrominanzwert) für einen Bildpunkt bzw. für einen Bildblock (entsprechend gemittelt aus den Bildpunkten des Bildblocks) auf einmal mit dem vorgegebenen Schwellwert verglichen werden. Ebenso ist es denkbar, jeweils Helligkeit, Farbton und Farbsättigung für jeden Block des Bildes mit einem entsprechend vorgegebenen Wert, der zur Hautfarbe gehört, zu vergleichen. In diesem Fall erhält man drei Ergebnisse dreier Vergleichsoperationen, wobei diese drei Ergebnisse zu einer Entscheidung, ob das Kriterium erfüllt ist oder nicht, verwendet werden können. Mit anderen Worten erhält man also die Ergebnisse einzelner Vergleiche zu $D_1$, $D_2$ und $D_3$. In den oben angegebenen Gleichungen (1) bis (3) werden die drei einzelnen Vergleichswerte miteinander kombiniert und insgesamt mit dem vorgegebenen Schwellwert verglichen.

Ferner ist es möglich, ein blockbasiertes Bildcodierverfahren nach dem MPEG-4-Standard zu verwenden, wobei der MPEG-4-Standard es ermöglicht, für einen definierten Bereich (ein sog. Bildobjekt), also bei dem vorzugsweise das vorgegebene Kriterium erfüllt ist, Übertragungsmodalitäten zu vereinbaren.

Eine andere Weiterbildung besteht darin, daß die höhere Bildqualität dadurch erreicht wird, daß eine höhere Bildwiederholrate für den ersten Bereich bestimmt wird. Durch eine selektive Bildwiederholrate für den ersten Bereich (oder entsprechend mehrere erste Bereiche innerhalb des digitalisierten Bildes), die entsprechend höher ist als eine Bildwiederholrate für den (mindestens einen) zweiten Bereich, wird insbesondere eine häufigere Aktualisierung des ersten Bereichs und somit eine flüssigere Darstellung von Bewegungen ermöglicht. Handelt es sich um die Darstellung eines Gesichts, das z.B. einen Nachrichtensprecher darstellt, so sieht der Beobachter die Lippenbewegungen in kontinuierlichen Bewegtbildern, wohingegen der Hintergrund, der nicht der Hautfarbe entspricht, weitaus seltener aktualisiert wird und damit Bewegungen auf diesem Hintergrund nur ruckartig wahrgenommen werden.

Eine andere Möglichkeit, die Bildqualität für den ersten Bereich zu verbessern, besteht darin, die Ortsauflösung für diesen ersten Bereich zu erhöhen. So gewährleistet eine gegenüber dem zweiten Bereich höhere Anzahl von Bildpunkten (Pixel) eine deutlichere Darstellung (höhere Auflösung) des ersten Bereichs.

Eine dritte Möglichkeit zur Verbesserung der Bildqualität stellt die Beeinflussung der Quantisierungswerte, sowohl für den ersten als auch für den zweiten Bereich, dar. Der erste Bereich wird dabei mit einem ersten Quantisierungswert, der zweite Bereich mit einem zweiten Quantisierungswert quantisiert. Eine höhere Bildqualität des ersten Bereichs wird dadurch gewährleistet, daß der erste Quantisierungswert kleiner als der zweite Quantisierungswert ist.

Im Rahmen einer zusätzlichen Weiterbildung ist es möglich, gemäß MPEG-Standard eine Umschaltung von dem ersten Quantisierungswert (niedriger Wert -> hohe Auflösung -> hohe Anforderung an Bandbreite) auf den zweiten Quantisierungswert (hoher Wert -> niedrige Auflösung -> geringe Anforderung an Bandbreite) durchzuführen (wobei der erste Quantisierungswert kleiner ist als der zweite Quantisierungswert), indem ein DQUANT-Symbol mit dem zweiten Quantisierungswert als ein Parameter und umgekehrt die Umschaltung von dem zweiten Quantisierungswert auf den ersten Quantisierungswert erfolgt, indem das DQUANT-Symbol mit dem ersten Quantisierungswert als dem Parameter übermittelt wird.

Auch ist es eine Weiterbildung der Erfindung, daß ein möglichst großer zusammenhängender Bereich als erster oder als zweiter Bereich gewährleistet wird, da auf diese Weise die Anzahl der Umschaltvorgänge zwischen den Quantisierungswerten gering gehalten wird. Wie oben beschrieben, geht jedem Umschaltvorgang ein DQUANT-Symbol voraus, durch das ein Überhang (engl.: Overhead) erzeugt wird, der für einen Verlust an Bandbreite, die ansonsten für Bildinformation genutzt werden könnte, verantwortlich ist.

Werden beispielsweise mehrere Blöcke des Bildes, die das Kriterium erfüllen, mit dem entsprechenden Quantisierungswert verarbeitet, so soll ein einzelner Block, der zwischen diesen mehreren Blöcken liegt und den vorgegebenen Schwellwert überschreitet, also gemäß einer der Gleichungen (1) bis (3) mit einem anderen Quantisierungswert als die Bildblöcke, die das Kriterium erfüllen, quantisiert werden, so wird vorzugsweise der einzelne Block, für den extra ein neuer Quantisierungswert vereinbart werden müßte, auch mit dem niedrigeren Quantisierungswert, wie die Blöcke, die das Kriterium erfüllen, verarbeitet.

Es ist ein Ziel, die Umschaltvorgänge zwischen Quantisierungswerten, die jeweils für nachfolgende Blöcke des Bildes gelten, gering zu halten. Ein einzelner Block, inmitten von Blöcken, die das Kriterium erfüllen, wird dazu vorteilhaft auch mit niedrigem Quantisierungswert verarbeitet und somit mit entsprechend hoher Bildqualität, wie die ihn umgebenden Bildblöcke, übertragen.

Es ist vorteilhaft, in einer Vorverarbeitung vor der eigentlichen Quantisierung festzulegen, welche Blöcke das Kriterium erfüllen, welche Blöcke in der Nähe der Blöcke, die das Kriterium erfüllen, das Kriterium nicht erfüllen und welche Blöcke des Bildes das Kriterium nicht erfüllen und in einem vorgegebenem Abstand zu den Blöcken, die das Kriterium erfüllen, liegen. Jetzt ist es möglich, entsprechend der zeilenweisen Verarbeitung des Bildes anhand blockbasierter Codierverfahren, eine günstige Anzahl und Verteilung der Umschaltvorgänge zwischen den Quantisierungswerten zu bestimmen, indem möglichst große zusammenhängende Bereiche für Blöcke des Bildes, die das Kriterium erfüllen, bzw. nicht erfüllen, ermittelt werden.

Dazu kann der Schwellwerts S für einen Block in Abhängigkeit von einer Anzahl von Überschreitungen dieses Schwellwerts S in den Nachbarblöcken gesteuert werden. Der Schwellwert S ist vorzugsweise abzusenken, wenn von den Nachbarblöcken viele die vorgegebene Farbe aufweisen und entsprechend ist der Schwellwert S anzuheben, wenn von den Nachbarblöcken wenige die vorgegebene Farbe aufweisen.

Es sei an dieser Stelle angemerkt, daß auch eine Kombination aus den genannten Möglichkeiten zur Verbesserung der Bildqualität angewandt werden kann. Zumeist unterliegen die Wünsche nach verbesserter Bildqualität nur physikalischen Rahmenbedingungen, z. B. einer zur Verfügung stehenden maximalen Bandbreite. Dies ist nur von der jeweiligen Anwendung abhängig und schränkt die Kombination von Möglichkeiten zur Verbesserung der Bildqualität, insbesondere von Bereichen eines digitalisierten Bildes, nicht ein.

Ein Vorteil der Erfindung besteht darin, die Bildqualität innerhalb eines zu übertragenden Bildes lokal unterschiedlich festzulegen. So ist es von immensem Vorteil, Anteile eines Bildes, die hautfarben sind, mit höherer Bildqualität zu übertragen als andere Teile des Bildes. Ein Beispiel hierfür ist eine Nachrichtensendung, bei der das Gesicht und die Hände des Nachrichtensprechers mit einem niedrigeren Quantisierungswert und damit in höherer Bildqualität quantisiert und übertragen werden als der nicht-hautfarbene Bereich des Bildes. Somit wird hörbehinderten Menschen die Möglichkeit eröffnet, Information aus dem Bereich hoher Bildqualität (hautfarbener Bereich) zu erhalten, beispielsweise durch Lippenablesen oder Gesteninterpretation. Insbesondere wird dadurch das Bildtelefon für sprach- bzw. hörbehinderte Menschen ein nutzbares Kommunikationsmedium, da sowohl Hände, wie auch Gesicht (Lippen), in höherer Qualität übertragen werden als der Rest des Bildes und damit für sprach- bzw. hörbehinderte Menschen die Möglichkeit erschlossen wird, mittels Lippen- bzw. Handbewegungen zu kommunizieren.

Erfindungsgemäß geschaffen wird ferner eine Anordnung zur Bildverarbeitung mit einer Prozessoreinheit, die derart eingerichtet ist, daß die oben beschriebenen Verfahrensschritte durchgeführt werden.

Weiterhin wird eine Anordnung zur Codierung eines digitalen Bildes angegeben, die ein Mittel zur Durchführung einer spektralen Transformation aufweist, das das digitalisierte Bild in den Spektralbereich transformiert. Auch ist ein Mittel zur Entropiecodierung vorgesehen, das eine Datenreduktion durchführt. Schließlich weist die Anordnung zur Codierung einen Puffer auf, der Daten variabler Datenrate von dem Mittel zur Entropiecodierung aufnimmt und an einen Kanal, der vorzugsweise eine feste Datenrate aufweist, weiterleitet.

Eine Weiterbildung der Erfindung besteht darin, daß ein Füllstand des Puffers den Quantisierungswert der Vorrichtung zur Quantisierung anpaßt.

In einer anderen Weiterbildung kann die Vorrichtung zur Quantisierung adaptiert werden, indem ein gefüllter Puffer den Quantisierungswert erhöht und somit eine unscharfe Übertragung des Bildes bewirkt und ein leerer Puffer den Quantisierungswert reduziert, so daß eine höhere Bildqualität gewährleistet wird.

Weiterbildungen der Erfindung ergeben sich auch aus den abhängigen Ansprüchen.

Ausführungsbeispiele der Erfindung werden nachfolgend anhand der Zeichnungen dargestellt und erläutert.

Es zeigen

Fig.1   eine Anordnung zweier Rechner, einer Kamera und eines Bildschirms, mit denen die Codierung, die Übertragung sowie die Decodierung und Darstellung der Bilddaten erfolgen,

Fig.2   eine Skizze einer Vorrichtung zur blockbasierten Codierung eines digitalisierten Bildes,

Fig.3   Schritte eines Verfahrens zur Quantisierung eines digitalisierten Bildes durch einen Rechner,

Fig.4   eine Skizze, die eine Adaption der Quantisierung abhängig von einem Pufferstand darstellt,

Fig.5 eine Skizze, die Möglichkeiten zur Steigerung der Bildqualität darstellt.

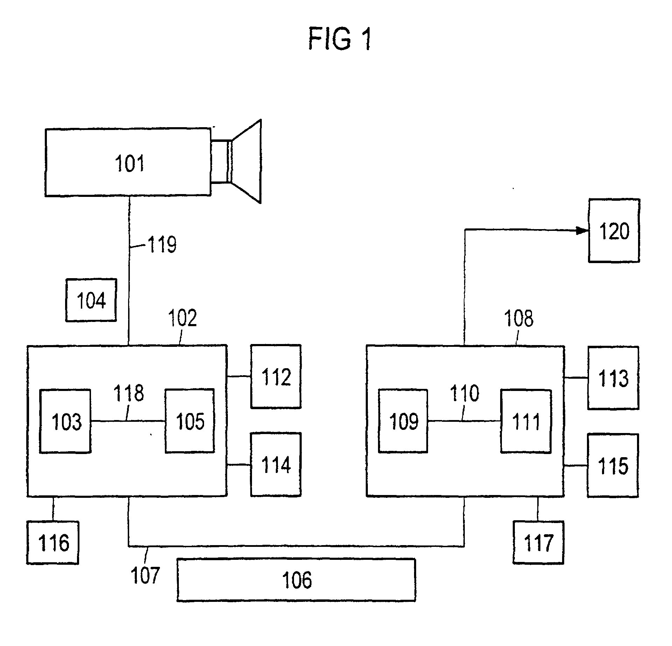

In **Fig.1** ist eine Anordnung dargestellt, die zwei Rechner und eine Kamera umfaßt, wobei Bildcodierung, Übertragung der Bilddaten und Bilddecodierung veranschaulicht werden.

Eine Kamera 101 ist mit einem ersten Rechner 102 über eine Leitung 119 verbunden. Die Kamera 101 übermittelt aufgenommene Bilder 104 an den ersten Rechner 102. Der erste Rechner 102 verfügt über eine erste Prozessoreinheit 103, die über eine Bus 118 mit einem Bildspeicher 105 verbunden ist. Mit der Prozessoreinheit 103 des ersten Rechners 102 werden die Verfahren zur Bildcodierung durchgeführt. Auf diese Art codierte Bilddaten 106 werden von dem ersten Rechner 102 über eine Kommunikationsverbindung 107, vorzugsweise eine Leitung oder eine Funkstrecke, zu einem zweiten Rechner 108 übertragen. Der zweite Rechner 108 enthält eine zweite Prozessoreinheit 109 die über einen Bus 110 mit dem Bildspeicher 111 verbunden ist. Auf der zweiten Prozessoreinheit 109 werden Verfahren zur Bilddecodierung durchgeführt.

Sowohl der erste Rechner 102 als auch der zweite Rechner 108 verfügen jeweils über einen Bildschirm 112 bzw. 113, auf dem die Bilddaten 104 visualisiert werden. Zur Bedienung sowohl des ersten Rechners 102 als auch des zweiten Rechners 108 sind jeweils Eingabeeinheiten vorgesehen, vorzugsweise eine Tastatur 114 bzw. 115, sowie eine Computermaus 116 bzw. 117.

Die Bilddaten 104, die von der Kamera 101 über die Leitung 119 zu dem ersten Rechner 102 übertragen werden, sind vorzugsweise Daten im Zeitbereich, während die Daten 106, die von dem ersten Rechner 102 zu dem zweiten Rechner 108 über die Kommunikationsverbindung 107 übertragen werden, Bilddaten im Spektralbereich sind.

Auf einem Bildschirm 120 werden die decodierten Bilddaten dargestellt.

Nachfolgend soll kurz näher auf die MPEG-Bildcodierung eingegangen werden. Ausführliche Erläuterungen sind in [2] zu finden.

Das im MPEG-Standard verwendete Codierverfahren basiert im wesentlichen auf der hybriden DCT (Diskreten Cosinus Transformation) mit Bewegungskompensation. Dieses Verfahren wird in ähnlicher Form für die Bildtelefonie mit n x 64kbit/s (CCITT-Empfehlung H.261), für die TV-Kontribution (CCR-Empfehlung 723) mit 34 bzw. 45Mbit/s und für Multimedia-Applikationen mit 1,2Mbit/s (ISO-MPEG-1) verwendet. Die hybride DCT besteht aus einer zeitlichen Verarbeitungsstufe, die die Verwandtschaftsbeziehungen aufeinanderfolgender Bilder ausnutzt, und einer örtlichen Verarbeitungsstufe, die die Korrelation innerhalb eines Bildes ausnutzt.

Die örtliche Verarbeitung (Intraframe-Codierung) entspricht im wesentlichen der klassischen DCT-Codierung. Das Bild wird in Blöcke von 8x8 Bildpunkten zerlegt, die jeweils mittels DCT in den Frequenzbereich transformiert werden. Das Ergebnis ist eine Matrix von 8x8 Koeffizienten, die näherungsweise die zweidimensionalen Ortsfrequenzen im transformierten Bildblock widerspiegeln. Die Frequenz der AC-Koeffizienten steigt entlang der $f_x$- und $f_y$-Achsen, während der DC-Koeffizient (Gleichanteil) den mittleren Grauwert des Bildblocks darstellt.

Nach der Transformation findet eine Datenexpansion statt, denn die Amplituden der Koeffizienten werden aus Gründen der Rechengenauigkeit vorzugsweise mit 12 Bit aufgelöst. Allerdings wird in natürlichen Bildvorlagen eine Konzentration der Energie um den DC-Wert (Gleichanteil) stattfinden, während die höchstfrequenten Koeffizienten meist Null sind.

In einem nächsten Schritt erfolgt eine spektrale Gewichtung der Koeffizienten, so daß die Amplitudengenauigkeit der hochfrequenten Koeffizienten verringert wird. Hierbei nützt man die Eigenschaften des menschlichen Auges aus, das hohe Ortsfrequenzen nur ungenauer auflösen kann als niedrige.

Ein zweiter Schritt der Datenreduktion erfolgt in Form einer adaptiven Quantisierung, durch die die Amplitudengenauigkeit der Koeffizienten weiter verringert wird bzw. durch die die kleinen Amplituden zu Null gesetzt werden. Das Maß der Quantisierung hängt dabei vom Füllstand des Ausgangspuffers ab: Bei leerem Puffer erfolgt eine feine Quantisierung, so daß mehr Daten erzeugt werden, während bei vollem Puffer gröber quantisiert wird, wodurch sich die Datenmenge reduziert.

Nach der Quantisierung wird der Block diagonal abgetastet ("zigzag"-Scanning), anschließend erfolgt eine Entropiecodierung, die die eigentliche Datenreduktion bewirkt. Hierfür werden zwei Effekte ausgenutzt:

1.) Die Statistik der Amplitudenwerte (hohe Amplitudenwerte treten seltener auf als kleine, so daß den seltenen Ereignissen lange und den häufigen Ereignissen kurze Codewörter zugeordnet werden (Variable-Length-Codierung, VLC). Auf diese Weise ergibt sich im Mittel eine geringere Datenrate als bei einer Codierung mit fester Wortlänge. Die variable Rate der VLC wird anschließend im Pufferspeicher geglättet.

2.) Man nutzt die Tatsache aus, daß von einem bestimmten Wert an in den meisten Fällen nur noch Nullen folgen. Statt aller dieser Nullen überträgt man lediglich einen EOB-Code (End Of Block), was zu einem signifikanten Codiergewinn bei der Kompression der Bilddaten führt. Statt der Ausgangsrate von 512bit sind in dem angegebenen Beispiel nur 46bit für diesen Block zu übertragen, was einem Kompressionsfaktor von über 11 entspricht.

Einen weiteren Kompressionsgewinn erhält man durch die zeitliche Verarbeitung (Interframe-Codierung). Zur Codierung von Differenzbildern wird weniger Datenrate benötigt als für die Originalbilder, denn die Amplitudenwerte sind weitaus geringer.

Allerdings sind die zeitlichen Differenzen nur klein, wenn auch die Bewegungen im Bild gering sind. Sind hingegen die Bewegungen im Bild groß, so entstehen große Differenzen, die wiederum schwer zu codieren sind. Aus diesem Grund wird die Bild-zu-Bild-Bewegung gemessen (Bewegungsschätzung) und vor der Differenzbildung kompensiert (Bewegungskompensation). Dabei wird die Bewegungsinformation mit der Bildinformation übertragen, wobei üblicherweise nur ein Bewegungsvektor pro Makroblock (z.B. vier 8x8-Bildblökke) verwendet wird.

Noch kleinere Amplitudenwerte der Differenzbilder werden erhalten, wenn statt der verwendeten Prädiktion eine bewegungskompensierte bidirektionale Prädiktion benutzt wird.

Bei einem bewegungskompensierten Hybridcoder wird nicht das Bildsignal selbst transformiert, sondern das zeitliche Differenzsignal. Aus diesem Grund verfügt der Coder auch über eine zeitliche Rekursionsschleife, denn der Prädiktor muß den Prädiktionswert aus den Werten der bereits übertragenen (codierten) Bilder berechnen. Eine identische zeitliche Rekursionsschleife befindet sich im Decoder, so daß Coder und Decoder völlig synchronisiert sind.

Im MPEG-2-Codierverfahren gibt es hauptsächlich drei verschiedene Methoden, mit denen Bilder verarbeitet werden können:

I-Bilder:　Bei den I-Bildern wird keine zeitliche Prädiktion verwendet, d.h., die Bildwerte werden direkt transformiert und codiert, wie in Bild 1 dargestellt. I-Bilder werden verwendet, um den Decodiervorgang ohne Kenntnis der zeitlichen Vergangenheit neu beginnen zu können, bzw. um eine Resynchronisation bei Übertragungsfehlern zu erreichen.

P-Bilder:　Anhand der P-Bilder wird eine zeitliche Prädiktion vorgenommen, die DCT wird auf den zeitlichen Prädiktionsfehler angewandt.

B-Bilder:　Bei den B-Bildern wird der zeitliche bidirektionale Prädiktionsfehler berechnet und anschließend transformiert. Die bidirektionale Prädiktion arbeitet grundsätzlich adaptiv, d. h. es wird eine Vorwärtsprädiktion, eine Rückwärtsprädiktion oder eine Interpolation zugelassen.

Ein Bildsequenz wird bei der MPEG-2-Codierung in sog. GOPs (Group Of Pictures) eingeteilt. n Bilder zwischen zwei I-Bildern bilden eine GOP. Der Abstand zwischen den P-Bildern wird mit m bezeichnet, wobei sich jeweils m-1 B-Bilder zwischen den P-Bildern befinden. Die MPEG-Syntax überläßt es jedoch dem Anwender, wie m und n gewählt werden. m=1 bedeutet, daß keine B-Bilder verwendet werden, und n=1 bedeutet, daß nur I-Bilder codiert werden.

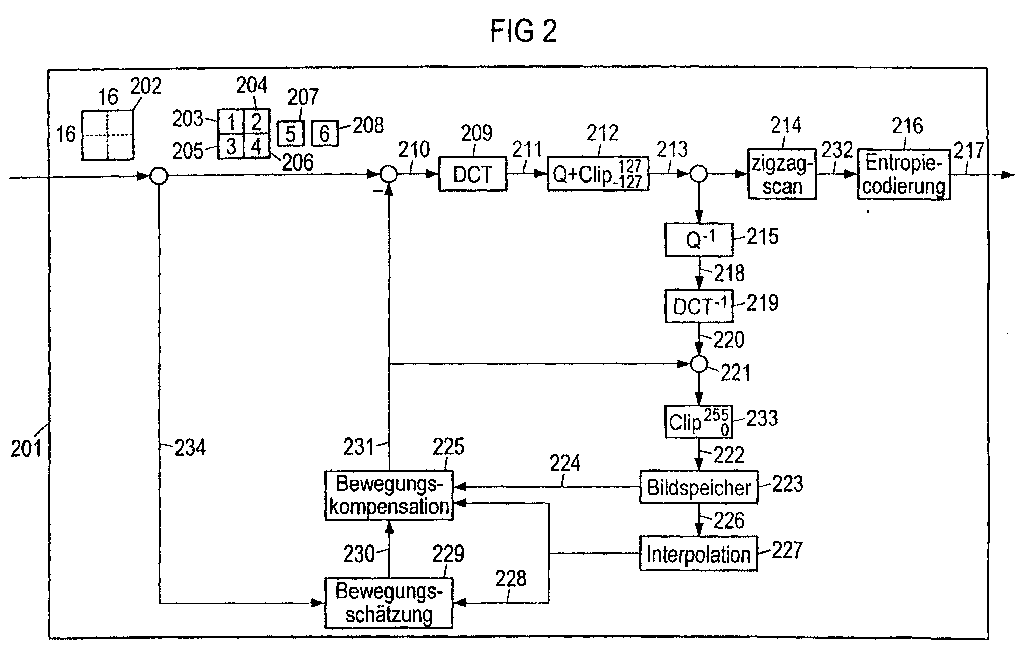

**Fig.2** zeigt eine Skizze einer Anordnung zur Durchführung eines blockbasierten Bildcodierverfahrens gemäß H.263-Standard (siehe [1]).

Ein zu codierender Videodatenstrom mit zeitlich aufeinanderfolgenden digitalisierten Bildern wird einer Bildcodierungseinheit 201 zugeführt. Die digitalisierten Bilder sind unterteilt in Makroblöcke 202, wobei jeder Makroblock 16x16 Bildpunkte hat. Der Makroblock 202 umfaßt 4 Bildblöcke 203, 204, 205 und 206, wobei jeder Bildblock 8x8 Bildpunkte, denen Luminanzwerte (Helligkeitswerte) zugeordnet sind, enthält. Weiterhin umfaßt jeder Makroblock 202 zwei Chrominanzblöcke 207 und 208 mit den Bildpunkten zugeordneten Chrominanzwerten (Farbinformation, Farbsättigung).

Der Block eines Bildes enthält einen Luminanzwert (=Helligkeit), einen ersten Chrominanzwert (=Farbton) und einen zweiten Chrominanzwert (=Farbsättigung). Dabei werden Luminanzwert, erster Chrominanzwert und zweiter Chrominanzwert als Farbwerte bezeichnet.

Die Bildblöcke werden einer Transformationscodierungseinheit 209 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 210 der Transformationscodierungseinheit (Diskrete Cosinus Transformation, DCT) 209 zugeführt. Dazu wird über eine Verbindung 234 der aktuelle Makroblock 202 einer Bewegungsschätzungseinheit 229 mitgeteilt. In der Transformationscodierungseinheit 209 werden für die zu codierenden Bildblöcke bzw. Differenzbildblöcke Spektralkoeffizienten 211 gebildet und einer Quantisierungseinheit 212 zugeführt. Diese Quantisierungseinheit 212 entspricht der erfindungsgemäßen Vorrichtung zur Quantisierung.

Quantisierte Spektralkoeffizienten 213 werden sowohl einer Scaneinheit 214 als auch einer inversen Quantisierungseinheit 215 in einem Rückwärtspfad zugeführt. Nach einem Scanverfahren, z.B. einem "zigzag"-Scanverfahren, wird auf den gescannten Spektralkoeffizienten 232 eine Entropiecodierung in einer dafür vorgesehenen Entropiecodierungseinheit 216 durchgeführt. Die entropiecodierten Spektralkoeffizienten werden als codierte Bilddaten 217 über einen Kanal, vorzugsweise eine Leitung oder eine Funkstrecke, zu einem Decoder übertragen.

In der inversen Quantisierungseinheit 215 erfolgt eine inverse Quantisierung der quantisierten Spektralkoeffizienten 213. So gewonnene Spektralkoeffizienten 218 werden einer inversen Transformationscodierungseinheit 219 (Inverse Diskrete Cosinus Transformation, IDCT) zugeführt. Rekonstruierte Codierungswerte (auch Differenzcodierungswerte) 220 werden im Differenzbildmodus einen Addierer 221 zugeführt. Der Addierer 221 erhält ferner Codierungswerte eines Bildblocks, die sich aus einem zeitlich vorangegangenen Bild nach einer bereits durchgeführten Bewegungskompensation ergeben. Mit dem Addierer 221 werden rekonstruierte Bildblöcke 222 gebildet und in einem Bildspeicher 223 abgespeichert.

Chrominanzwerte 224 der rekonstruierten Bildblöcke 222 werden aus dem Bildspeicher 223 einer Bewegungskompensationseinheit 225 zugeführt. Für Helligkeitswerte 226 erfolgt eine Interpolation in einer dafür vorgesehenen Interpolationseinheit 227. Anhand der Interpolation wird die Anzahl in dem jewei-ligen Bildblock enthaltener Helligkeitswerte vorzugsweise verdoppelt. Alle Helligkeitswerte 228 werden sowohl der Bewegungskompensationseinheit 225 als auch der Bewegungsschätzungseinheit 229 zugeführt. Die Bewegungsschätzungseinheit 229 erhält außerdem die Bildblöcke des jeweils zu codierenden Makroblocks (16x16 Bildpunkte) über die Verbindung 234. In der Bewegungsschätzungseinheit 229 erfolgt die Bewegungsschätzung unter Berücksichtigung der interpolierten Helligkeitswerte ("Bewegungsschätzung auf Halbpixelbasis"). Vorzugsweise werden bei der Bewegungsschätzung absolute Differenzen der einzelnen Helligkeitswerte in dem aktuell zu codierenden Makroblock 202 und dem rekonstruierten Makroblock aus dem zeitlich vorangegangenen Bild ermittelt.

Das Ergebnis der Bewegungsschätzung ist ein Bewegungsvektor 230, durch den eine örtliche Verschiebung des ausgewählten Makroblocks aus dem zeitlich vorangegangenen Bild zu dem zu codierenden Makroblock 202 zum Ausdruck kommt.

Sowohl Helligkeitsinformation als auch Chrominanzinformation bezogen auf den durch die Bewegungsschätzungseinheit 229 ermittelten Makroblock werden um den Bewegungsvektor 230 verschoben und von den Codierungswerten des Makroblocks 202 subtrahiert (siehe Datenpfad 231).

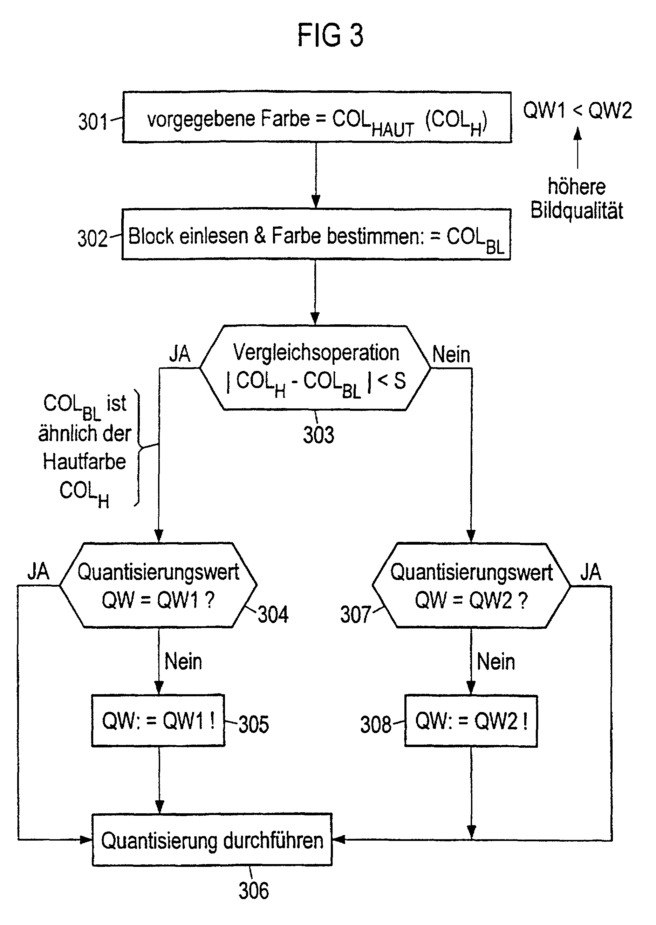

In **Fig.3** werden Schritte eines Verfahrens zur Quantisierung eines digitalisierten Bildes durch einen Rechner dargestellt.

In einem Schritt 301 wird als vorgegebene Farbe (das Kriterium des ersten Bereichs des Bildes) die Hautfarbe $COL_H$ bestimmt. In einem Schritt 302 wird ein Block des Bildes eingelesen und seine Farbe $COL_{BL}$ bestimmt. Da jedes einzelne Pixel des Blocks einen Helligkeitswert, einen Farbton und eine Farbsättigung aufweist, wird für den ganzen Block ein entsprechender Mittelwert gebildet, der zusammengefaßt als Farbwerte $COL_{BL}$ angegeben wird. In einem Schritt 303 wird eine Vergleichsoperation durchgeführt, die die Farbe des aktuellen Blockes $COL_{BL}$ mit der vorgegebenen Farbe $COL_H$ (Hautfarbe) vergleicht. Eine derartige Vergleichsoperation ist allgemein bestimmt durch:

$$|COL_H - COL_{BL}| < S \qquad (4)$$

Wie oben beschrieben, stehen Farbwerte für Helligkeit, Farbton und Farbsättigung, die als einzelne Komponenten der Farbwerte in die Vergleichsoperation eingehen. Nachfolgend werden drei verschiedene Vergleichsoperationen genannt, wobei keine Beschränkung der Erfindung auf diese Operationen beabsichtigt ist:

$$|x_Y - h_Y| + |x_{Cr} - h_{Cr}| + |x_{Cb} - h_{Cb}| < S \qquad (1),$$

$$|x_Y - h_Y|^2 + |x_{Cr} - h_{Cr}|^2 + |x_{Cb} - h_{Cb}|^2 < S \qquad (2),$$

$$k_1 \cdot |D_1| + k_2 \cdot |D_2| + k_3 \cdot |D_3| < S, \qquad (3),$$

wobei

$x_Y$      einen Luminanzwert (=Helligkeit) der ersten Farbwerte,

$x_{Cr}$      einen ersten Chrominanzwert (=Farbton) der ersten Farbwerte,

$x_{Cb}$      einen zweiten Chrominanzwert (=Farbsättigung) der ersten Farbwerte,

$h_Y$      einen Luminanzwert (=Helligkeit) der zweiten Farbwerte,

$h_{Cr}$      einen ersten Chrominanzwert (=Farbton) der zweiten Farbwerte,

$h_{Cb}$      einen zweiten Chrominanzwert (=Farbsättigung) der zweiten Farbwerte,

S      den vorgegebene Schwellwert,

$k_1, k_2, k_3$      vorgebbare Gewichte,

$D_1$      einen ersten Vergleich des Luminanzwerts der ersten Farbwerte mit einem Luminanzwert der zweiten Farbwerte,

$D_2$      einen zweiten Vergleich eines ersten Chrominanzwerts der ersten Farbwerte mit einem ersten Chrominanzwert der zweiten Farbwerte,

$D_3$      einen dritten Vergleich eines zweiten Chrominanzwerts der ersten Farbwerte mit einem zweiten Chrominanzwert der zweiten Farbwerte

bezeichnen.

In dem Schritt 303 wird das Ergebnis der Vergleichsoperation mit dem Schwellwert S verglichen. Ist die Abweichung der vorgegebenen Farbe (Hautfarbe) $COL_H$ und der Farbe des Blockes $COL_{BL}$ kleiner als der vorgegebene Schwellwert S, so ist die Farbe des Blokkes $COL_{BL}$ zumindest ähnlich der Hautfarbe $COL_H$. In diesem Fall wird in einem Schritt 304 abgefragt, ob der momentane Quantisierungswert QW gleich dem ersten Quantisierungswert QW1 ist. Es sei bemerkt, daß der erste Quantisierungswert QW1 **kleiner** als der zweite Quantisierungswert QW2 ist. Je kleiner ein Quantisierungswert ist, desto höher die dadurch erzielte Bildqualität. Ist gemäß der Abfrage in dem Schritt 304 der Quantisierungswert QW gleich dem ersten Quantisierungswert QW1, so wird die Quantisierung durchgeführt (siehe Schritt 306). Ansonsten wird in einem Schritt 305 als Quantisierungswert QW der erste Quantisierungswert QW1 gesetzt und daran anschließend der Schritt 306, die Quantisierung, durchgeführt.

Ergibt die Vergleichsoperation 303 keine Ähnlichkeit der Farbe des Blockes $COL_{BL}$ mit der Hautfarbe $COL_H$, so wird in einem Schritt 307 abgefragt, ob der momentane Quantisierungswert QW gleich dem zweiten Quantisierungswert QW2 ist. Ist dies der Fall, so wird die Quantisierung (siehe Schritt 306) durchgeführt, ansonsten wird in einem Schritt 308 als neuer Quantisierungswert QW der zweite Quantisierungswert QW2 gesetzt.

Im Rahmen der oben erwähnten Vorverarbeitung wird in die Schritt 304 und 307 derart eingegriffen, daß nicht nur abgefragt wird, ob der Quantisierungswert QW als Folge der Vergleichsoperation aus dem Schritt 303 angepaßt werden muß, sondern einen möglichst großen zusammenhängenden, also mit einem Quantisierungswert zu übertragenden, Bereich von Blöcken zu erhalten.

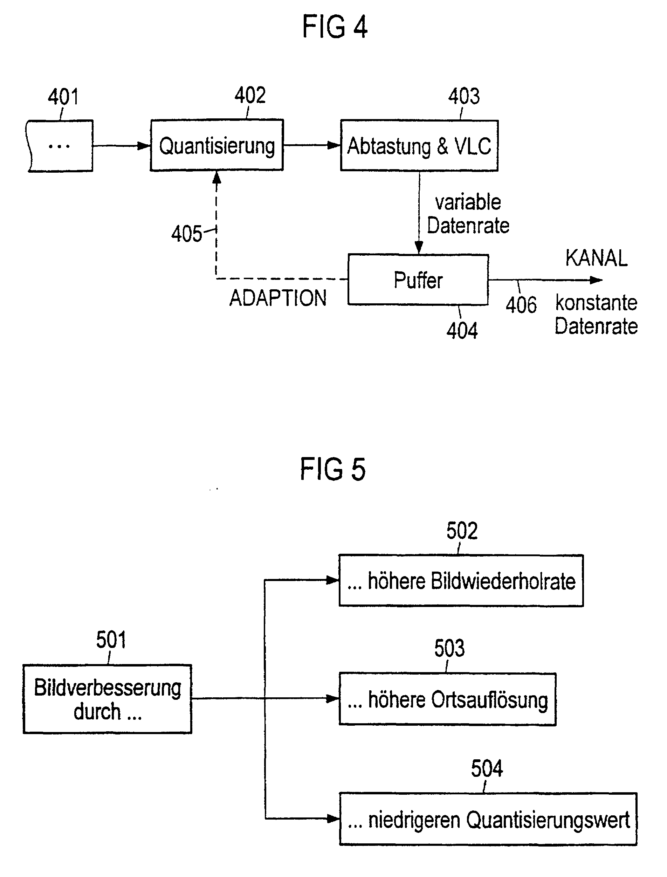

In **Fig.4** ist eine Skizze dargestellt, die eine Anordnung der Quantisierung abhängig von einem Pufferstand darstellt.

Ein Block 401 in Fig.4 subsummiert die ersten Blöcke eines Blockschaltbildes eines klassischen Interframe-Coders. Ein digitalisiertes Bild wird anhand einer DCT in den Frequenzbereich umgesetzt, dort erfolgt eine Gewichtung der Spektralkoeffizienten, die in einem Block 402 eine Quantisierung erfahren. Nach der Quantisierung wird in einem Schritt 403 eine Abtastung mit variabler Längencodierung durchgeführt und die so gewonnenen Daten in einen Puffer 404 geschrieben. Aus dem Puffer 404 werden die komprimierten Bilddaten über einen Kanal 406 an einen Decoder übermittelt.

Da der Kanal eine konstante Datenrate zur Verfügung stellt, eine Bildübertragung jedoch zumindest annähernd Echtzeitanforderungen genügen sollte, steht für jedes zu übertragende Bild eine bestimmte Zeit zur Verfügung. Erfolgt die Bildcodierung nicht in dieser Zeit, wird nicht das ganze Bild übertragen. Um sicherzustellen, daß stets ein ganzes Bild übertragen wird, wird, abhängig vom Füllstand des Puffers 404, die Quantisierung 402 adaptiert (siehe Adaptionspfad 405). Stellt man bei der Bildcodierung fest, daß die verbleibende Zeit nicht ausreicht, um das ganze Bild zu dem Decoder zu übertragen, so wird die Quantisierung adaptiert, indem der Quantisierungswert QW erhöht wird. Dadurch erfolgt eine ungenaue, unscharfe Bildkompression, die aber entsprechend schneller durchgeführt werden kann und somit den Echtzeitanforderungen genügt.

Dabei wird stets gewährleistet, daß der erste Bereich, der ein Kriterium erfüllt und mit entsprechend hoher Qualität übertragen werden soll, dennoch eine höhere Bildqualität sicherstellt als der verbleibende zweite Bereich. Der Quantisierungswert für den ersten Bereich ist somit stets kleiner als der für den zweiten Bereich.

In **Fig.5** sind verschiedene Möglichkeiten zur Verbesserung (siehe Block 501) der Bildqualität dargestellt.

Im Hinblick auf das oben ausführlich beschriebene Verfahren bezieht sich die Verbesserung der Bildqualität insbesondere auf den dafür vorgesehenen Bereich mit der vorgegebenen Farbe. Hautfarbene Flächen eines Bildes sollen mit einer höheren Bildqualität übertragen und auf einem Decoder dargestellt werden als der Rest des Bildes.

Eine erste Möglichkeit 502 umfaßt die Erhöhung der Bildwiederholrate (für den Bereich mit vorgebener Farbe). Durch eine häufige Aktualisierung des entsprechenden Bereichs wird dieser flüssiger als der Rest des Bewegtbildes dargestellt. Durch entsprechende Einstellungen bei der Bildcodierung wird vorzugsweise Echtzeitdarstellung des Bereichs gewährleistet, so daß eine fließende Bewegung hautfarbener Flächen auf Seite des Decoders wahrgenommen wird.

Eine zweite Möglichkeit 503 stellt die Erhöhung der Ortsauflösung dar. Durch mehrere Punkte pro Flächeneinheit für den Bereich, der das vorgegebene Kriterium erfüllt, wird eine höhere Bildschärfe erzielt.

Schließlich umfaßt eine dritte Möglichkeit 504 die Reduzierung des Quantisierungswerts für den vorgegebenen Bereich (wie oben ausführlich dargelegt). Durch einen gegenüber dem Rest des Bildes reduzierten Quantisierungswert erfolgt eine Bildcodierung für den vielfach erwähnten Bereich, der das vorgegebene Kriterium erfüllt bzw. vorzugsweise hautfarben ist, im Frequenzbereich mit einer feineren Quantisierung und somit einer höheren Bildqualität.

Ferner sei angemerkt, daß auch Kombinationen aus den erwähnten Möglichkeiten zur Verbesserung der Bildqualität, insbesondere für den vorgegebenen Bereich, der das Kriterium erfüllt, umsetzbar sind.

Im Rahmen dieses Dokuments wurden folgende Veröffentlichungen zitiert:

[1] ITU-T, International Telecommunication Union, Telecommunications Sector of ITU, Draft ITU-T Recommendation H.263, Videocoding for low bitrate communication, 02. Mai 1996.

[2] J. De Lameillieure, R. Schäfer: "MPEG-2-Bildcodierung für das digitale Fernsehen", Fernseh- und Kino-Technik, 48.Jahrgang, Nr.3/1994, Seiten 99-107.

**Patentansprüche**

1. Verfahren zur Bildverarbeitung,

   a) bei dem ein digitalisiertes Bild in zwei Bereiche unterteilt wird, wobei ein erster Bereich das Kriterium einer vorgegebenen Farbe erfüllt und ein zweiter Bereich dieses Kriterium nicht erfüllt,
   b) bei dem der erste Bereich mit einer höheren Bildqualität verarbeitet wird als der zweite Bereich;
   c) bei dem die höhere Bildqualität erreicht wird, indem der erste Bereich mit einem ersten Quantisierungswert und der zweite Bereich mit einem zweiten Quantisierungswert quantisiert werden, wobei der erste Quantisierungswert kleiner als der zweite Quantisierungswert ist;
   d) bei dem, wenn das Kriterium der vorgegebenen Farbe erfüllt ist, ein möglichst großer zusammenhängender Bereich, der mehrere Blöcke umfaßt, mit vorgegebener Farbe, insbesondere eine der menschlichen Haut ähnliche, gewährleistet wird, indem eine der folgenden Möglichkeiten durchgeführt wird:

   (1) Erfüllt ein Block das Kriterium der vorgegebenen Farbe nicht, wobei dieser Block überwiegend umgeben ist von weiteren Blöcken, die das Kriterium erfüllen, so wird auch dieser Block mit dem ersten Quantisierungswert codiert, wenn für ihn das Ergebnis einer Vergleichsoperation zwischen der Farbe des jeweiligen Blocks und der vorgegebenen Farbe geringfügig oberhalb eines vorgegebenen Schwellenwerts liegt, wobei ein Farbvergleich auf der Basis der Helligkeit des Farbtons und der Farbsättigung erfolgt;
   (2) Erfüllt ein Block das Kriterium der vorgegebenen Farbe nicht, wobei dieser Block inmitten von Blöcken liegt, die das Kriterium erfüllen, so wird auch dieser Block mit dem ersten Quantisierungswert codiert.

2. Verfahren nach Anspruch 1, bei dem das Biid in mehrere Bereiche unterteilt wird, wobei eine Anzahl erster Bereiche, die das Kriterium erfüllen, mit einer höheren Bildqualität verarbeitet wird, als eine Anzahl zweiter Bereiche, die das Kriterium nicht erfüllen.

3. Verfahren nach Anspruch 1 oder 2, bei dem das Kriterium darin besteht, daß ein Bereich des Bildes eine Farbe aus einem vorgegebenen Farbbereich hat.

4. Verfahren nach Anspruch 3, bei dem die Farbe in etwa der menschlichen Hautfarbe entspricht.

5. Verfahren nach einem der Ansprüche 1 bis 4, bei dem das Bild mit einem blockbasierten Bildcodierverfahren verarbeitet wird.

6. Verfahren nach Anspruch 5, bei dem das blockbasierte Bildcodierverfahren nach einem MPEG-Standard oder nach den H.261- oder H.263-Standards definiert ist.

7. Verfahren nach Anspruch 5 oder 6,

   a) bei dem für einen Block des Bildes, wobei der Block eine vorgegebene Größe aufweist, die Farbe des Blocks in Form zweiter Farbwerte des Blocks bestimmt wird;
   b) bei dem eine Vergleichsoperation der zweiten Farbwerte mit den ersten Farbwerten durchgeführt wird;
   c) bei dem, wenn ein Ergebnis der Vergleichsoperation kleiner als ein vorgegebener Schwellwert ist, das Kriterium erfüllt ist, also der Block zumindest ähnlich der menschlichen Haut ist,
   d) bei dem sonst das Kriterium für diesen Block nicht erfüllt ist.

8. Verfahren nach Anspruch 7, bei dem für jeden Block des Bildes das Verfahren iterativ durchgeführt wird.

9. Verfahren nach Anspruch 7 oder 8, bei dem die vorgegebene Größe des Blocks acht Bildpunkte mal acht Bildpunkte ist.

10. Verfahren nach Anspruch 7 oder 8, bei dem die vorgegebene Größe des Blocks 16 mal 16 Bildpunkte ist.

11. Verfahren nach einem der Ansprüche 7 bis 10, bei dem die Vergleichsoperation bestimmt ist durch:

$$|x_Y - h_Y| + |x_{Cr} - h_{Cr}| + |x_{Cb} - h_{Cb}| < S,$$

wobei

xy      einen Luminanzwert der erste Farbwerte,
$x_{Cr}$     einen ersten Chrominanzwert der ersten Farbwerte,
$x_{Cb}$     einen zweiten Chrominanzwert der ersten Farbwerte,
$h_Y$      einen Luminanzwert der zweiten Farbwerte
$h_{Cr}$     einen ersten Chrominanzwert der zweiten Farbwerte,

$h_{Cb}$   einen zweiten Chrominanzwert der zweiten Farbwerte,

S   den vorgegebenen Schwellenwert

bezeichnen.

12. Verfahren nach einem der Ansprüche 7 bis 10, bei dem die Vergleichsoperation bestimmt ist durch:

$$\left|x_Y - h_Y\right|^2 + \left|x_{Cr} - h_{Cr}\right|^2 + \left|x_{Cb} - h_{Cb}\right|^2 < S,$$

wobei

$x_Y$   einen Luminanzwert der erste Farbwerte,

$x_{Cr}$   einen ersten Chrominanzwert der ersten Farbwerte,

$x_{Cb}$   einen zweiten Chrominanzwert der ersten Farbwerte,

$h_Y$   einen Luminanzwert der zweiten Farbwerte

$h_{Cr}$   einen ersten Chrominanzwert der zweiten Farbwerte,

$h_{Cb}$   einen zweiten Chrominanzwert der zweiten Farbwerte,

S   den vorgegebenen Schwellenwert

bezeichnen.

13. Verfahren nach einem der Ansprüche 7 bis 10 bei dem die Vergleichsoperation bestimmt ist durch:

$$k_1 \cdot \left|D_1\right| + k_2 \cdot \left|D_2\right| + k_3 \cdot \left|D_3\right| < S,$$

wobei

$k_1, k_2, k_3$   vorgebbare Gewichte,

$D_1$   einen ersten Vergleich des Luminanzwerts der ersten Farbwerte mit einem Luminanzwert der zweiten Farbwerte,

$D_2$   einen zweiten Vergleich eines ersten Chrominanzwerts der ersten Farbwerte mit einem ersten Chrominanzwert der zweiten Farbwerte,

$D_3$   einen dritten Vergleich eines zweiten Chrominanzwerts der ersten Farbwerte mit einem zweiten Chrominanzwert der zweiten Farbwerte,

S   den vorgegebene Schwellwert

bezeichnen.

14. Verfahren nach einem der Ansprüche 1 bis 13, bei dem das blockbasierte Bildcodierverfahren nach dem MPEG-4-Standard definiert ist und für einen nach dem MPEG-4-Standard definierbaren Bereich das vorgegebene Kriterium erfüllt ist.

15. Verfahren nach einem der Ansprüche 1 bis 14, bei dem die höhere Bildqualität erreicht wird, indem eine höhere Bildwiederholrate für den ersten Bereich bestimmt wird.

16. Verfahren nach einem der Ansprüche 1 bis 15, bei dem die höhere Bildqualität erreicht wird, indem eine höhere Ortsauflösung für den ersten Bereich bestimmt wird derart, daß eine höhere Anzahl an Bildpunkten für den ersten Bereich verarbeitet werden.

17. Verfahren nach Anspruch 1, bei dem die Umschaltung von dem ersten Quantisierungswert auf den zweiten Quantisierungswert erfolgt, indem ein DQUANT-Symbol mit dem zweiten Quantisierungswert als ein Parameter und umgekehrt die Umschaltung von dem zweiten Quantisierungswert auf den ersten Quantisierungswert erfolgt, indem das DQUANT-Symbol mit dem ersten Quantisierungswert als dem Parameter übermittelt wird.

18. Anordnung zur Bildverarbeitung mit einer Prozessoreinheit, die derart eingerichtet ist, daß

  a) ein digitalisiertes Bild in zwei Bereiche unterteilt wird, wobei ein erster Bereich das Kriterium einer vorgegebenen Farbe erfüllt und ein zweiter Bereich dieses Kriterium nicht erfüllt;
  b) der erste Bereich mit einer höheren Bildqualität verarbeitet wird als der zweite Bereich;
  c) die höhere Bildqualität erreicht wird, indem der erste Bereich mit einem ersten Quantisierungswert und der zweite Bereich mit einem zweiten Quantisierungswert quantisiert werden, wobei der erste Quantisierungswert kleiner als der zweite Quantisierungswert ist;
  d) wenn das Kriterium der vorgegebenen Farbe erfüllt ist, ein möglichst großer zusammenhängender Bereich, der mehrere Bildblöcke umfaßt, mit vorgegebener Farbe, insbesondere eine der menschlichen Haut ähnliche Farbe, gewährleistet wird, indem eine der folgenden Möglichkeiten durchgeführt wird:

    (1) Erfüllt der Block das Kriterium der vorgegebenen Farbe nicht, wobei dieser Block überwiegend umgeben ist von weiteren Blöcken, die das Kriterium erfüllen, so wird auch dieser Block mit dem ersten Quantisierungswert codiert, wenn für ihn das Ergebnis einer Vergleichsoperation zwischen der Farbe des jeweiligen Blocks und der vorgegebenen Farbe geringfügig oberhalb eines vorgegebenen Schwellenwerts liegt, wobei ein Farbvergleich auf der Basis der Helligkeit, des Farbtons und der Farbsättigung erfolgt;

(2) Erfüllt ein Block das Kriterium der vorgegebenen Farbe nicht, wobei dieser Block inmitten von Blöcken liegt, die das Kriterium erfüllen, wird auch dieser Block mit dem ersten Quantisierungswert codiert.

**Claims**

1. Method for picture processing,

   a) in which a digitized picture is subdivided into two areas, a first area satisfying the criterion of a predetermined colour and a second area not satisfying this criterion,
   b) in which the first area is processed with a higher picture quality than the second area,
   c) in which the higher picture quality is achieved by quantizing the first area with a first quantization value and the second area with a second quantization value, the first quantization value being less than the second quantization value;
   d) in which, if the criterion of the predetermined colour is satisfied, a contiguous area which is as large as possible and comprises a plurality of blocks, with a predetermined colour, in particular a colour similar to that of human skin, is ensured by one of the following possibilities being implemented:

   (1) if a block does not satisfy the criterion of the predetermined colour, this block predominantly being surrounded by further blocks which satisfy the criterion, then this block is also coded with the first quantization value if, for it, the result of a comparison operation between the colour of the respective block and the predetermined colour lies slightly above a predetermined threshold value, a colour comparison being effected on the basis of the brightness of the hue and the colour saturation;
   (2) if a block does not satisfy the criterion of the predetermined colour, this block lying in the middle of blocks which satisfy the criterion, then this block is also coded with the first quantization value.

2. Method according to Claim 1,
   in which the picture is subdivided into a plurality of areas, a number of first areas, which satisfies the criterion, being processed with a higher picture quality than a number of second areas, which do not satisfy the criterion.

3. Method according to Claim 1 or 2,
   in which the criterion consists in the fact that an area of the picture has a colour from a predetermined colour gamut.

4. Method according to Claim 3,
   in which the colour approximately corresponds to the colour of human skin.

5. Method according to one of Claims 1 to 4,
   in which the picture is processed using a block-based picture coding method.

6. Method according to Claim 5,
   in which the block-based picture coding method is defined according to an MPEG standard or according to the H.261 or H.263 standards.

7. Method according to Claim 5 or 6,

   a) in which, for a block of the picture, the block having a predetermined size, the colour of the block is determined in the form of second colour values of the block;
   b) in which a comparison operation comparing the second colour values with the first colour values is carried out;
   c) in which, if a result of the comparison operation is less than a predetermined threshold value, the criterion is satisfied, that is to say the block is at least similar to human skin,
   d) in which otherwise the criterion is not satisfied for this block.

8. Method according to Claim 7,
   in which the method is carried out iteratively for each block of the picture.

9. Method according to Claim 7 or 8,
   in which the predetermined size of the block is eight times eight pixels.

10. Method accprding to Claim 7 or 8,
    in which the predetermined size of the block is 16 times 16 pixels.

11. Method according to one of Claims 7 to 10,
    in which the comparison operation is determined by:

$$\left| x_Y - h_Y \right| + \left| x_{Cr} - h_{Cr} \right| + \left| x_{Cb} - h_{Cb} \right| < S,$$

    where

    $x_Y$    denotes a luminance value of the first colour values,
    $x_{Cr}$    denotes a first chrominance value of the first colour values,

$x_{Cb}$  denotes a second chrominance value of the first colour values,

$h_Y$  denotes a luminance value of the second colour values,

$h_{Cr}$  denotes a first chrominance value of the second colour values,

$h_{Cb}$  denotes a second chrominance value of the second colour values,

S  denotes the predetermined threshold value.

**12.** Method according to one of Claims 7 to 10, in which the comparison operation is determined by:

$$|x_Y - h_Y|^2 + |x_{Cr} - h_{Cr}|^2 + |x_{Cb} - h_{Cb}|^2 < S,$$

where

$x_Y$  denotes a luminance value of the first colour values,

$x_{Cr}$  denotes a first chrominance value of the first colour values,

$x_{Cb}$  denotes a second chrominance value of the first colour values,

$h_Y$  denotes a luminance value of the second colour values,

$h_{Cr}$  denotes a first chrominance value of the second colour values,

$h_{Cb}$  denotes a second chrominance value of the second colour values,

S  denotes the predetermined threshold value.

**13.** Method according to one of Claims 7 to 10, in which the comparison operation is determined by:

$$k_1 \cdot |D_1| + k_2 \cdot |D_2| + k_3 \cdot |D_3| < S,$$

where

$k_1, k_2, k_3$  denote predeterminable weights,

$D_1$  denotes a first comparison of the luminance value of the first colour values with a luminance value of the second colour values,

$D_2$  denotes a second comparison of a first chrominance value of the first colour values with a first chrominance value of the second colour values,

$D_3$  denotes a third comparison of a second chrominance value of the first colour values with a second chrominance value of the second colour values,

S  denotes the predetermined threshold value.

**14.** Method according to one of Claims 1 to 13, in which the block-based picture coding method is defined according to the MPEG-4 standard and the predetermined criterion is satisfied for an area which can be defined according to the MPEG-4 standard.

**15.** Method according to one of Claims 1 to 14, in which the higher picture quality is achieved by determining a higher picture refresh rate for the first area.

**16.** Method according to one of Claims 1 to 15, in which the higher picture quality is achieved by determining a higher spatial resolution for the first area in such a way that a higher number of pixels are processed for the first area.

**17.** Method according to Claim 1, in which the changeover from the first quantization value to the second quantization value is effected by communicating a DQUANT symbol with the second quantization value as a parameter and, conversely, the changeover from the second quantization value to the first quantization value is effected by communicating the DQUANT symbol with the first quantization value as the parameter.

**18.** Arrangement for picture processing having a processor unit which is set up in such a way that

   a) a digitized picture is subdivided into two areas, a first area satisfying the criterion of a predetermined colour and a second area not satisfying this criterion;
   b) the first area is processed with a higher picture quality than the second area;
   c) the higher picture quality is achieved by quantizing the first area with a first quantization value and the second area with a second quantization value, the first quantization value being less than the second quantization value;
   d) if the criterion of the predetermined colour is satisfied, a contiguous area which is as large as possible and comprises a plurality of picture blocks, with a predetermined colour, in particular a colour similar to that of human skin, is ensured by one of the following possibilities being implemented:

      (1) if a block does not satisfy the criterion of the predetermined colour, this block predominantly being surrounded by further blocks which satisfy the criterion, then this block is also coded with the first quantization value if, for it, the result of a comparison operation between the colour of the respective block and the predetermined colour lies slightly above a predetermined threshold value, a colour comparison being effected on the basis of the brightness of the hue and the colour saturation;

(2) if a block does not satisfy the criterion of the predetermined colour, this block lying in the middle of blocks which satisfy the criterion, then this block is also coded with the first quantization value.

## Revendications

1. Procédé de traitement d'image,

a) d'après lequel une image numérisée est subdivisée en deux zones, une première zone satisfaisant au critère d'une couleur prescrite, et une seconde zone ne satisfaisant pas à ce critère ;

b) d'après lequel la première zone est traitée avec une qualité d'image plus élevée que celle de la seconde zone ;

c) d'après lequel la qualité d'image plus élevée est obtenue moyennant une quantification de la première zone avec une première valeur de quantification et une quantification de la seconde zone avec une seconde valeur de quantification, la première valeur de quantification étant inférieure à la seconde valeur de quantification ;

d) d'après lequel, lorsque le critère de la couleur prescrite est satisfait, l'on garantit une zone continue sans interruption, la plus grande possible, qui comprend plusieurs blocs, présentant une couleur prescrite, notamment une couleur similaire à celle de la peau humaine, moyennant l'exécution de l'une des possibilités suivantes :

(1) si un bloc ne satisfait pas au critère de la couleur prescrite, ce bloc étant entouré de manière prépondérante par d'autres blocs qui satisfont au critère, ce bloc est également codé avec la première valeur de quantification lorsque pour lui le résultat d'une opération de comparaison entre la couleur du bloc considéré et la couleur prescrite se situe légèrement au-dessus d'une valeur de seuil prescrite, la comparaison de couleur s'effectuant sur la base de la luminosité, de la teinte et de la saturation de couleur;

(2) si un bloc ne satisfait pas au critère de la couleur prescrite, ce bloc se situant au milieu de blocs qui satisfont au critère, ce bloc également est codé avec la première valeur de quantification.

2. Procédé selon la revendication 1, d'après lequel l'image est subdivisée en plusieurs zones, un certain nombre de premières zones qui satisfont au critère, étant traitées avec une qualité d'image plus élevée, qu'un certain nombre de secondes zones qui ne satisfont pas au critère.

3. Procédé selon la revendication 1 ou 2, d'après lequel le critère consiste en ce qu'une zone de l'image présente une couleur d'une gamme de couleur prescrite,

4. Procédé selon la revendication 3, d'après lequel la couleur correspond environ à la couleur de la peau humaine.

5. Procédé selon l'une des revendications 1 à 4, d'après lequel l'image est traitée par un procédé de codage d'image basé sur des blocs.

6. Procédé selon la revendication 5, d'après lequel le procédé de codage d'image basé sur des blocs est défini selon un standard MPEG ou selon les standards H.261 ou H.263.

7. Procédé selon la revendication 5 ou 6,

a) d'après lequel pour un bloc de l'image, le bloc présentant une grandeur prescrite, on détermine la couleur du bloc sous la forme de secondes valeurs de couleur du bloc ;

b) d'après lequel on effectue une opération de comparaison des secondes valeurs aux premières valeurs de couleur ;

c) d'après lequel, lorsqu'un résultat de l'opération de comparaison est inférieur à une valeur de seuil prescrite, le critère est satisfait, c'est à dire que le bloc est tout au moins similaire à la peau humaine ;

d) d'après lequel pour chaque bloc de l'image, on effectue le procédé de manière itérative.

8. Procédé selon la revendication 7, dans lequel on effectue le procédé de manière itérative pour chaque bloc de l'image.

9. Procédé selon la revendication 7 ou 8, d'après lequel la grandeur prescrite du bloc est de huit points-image fois huit points-image.

10. Procédé selon la revendication 7 ou 8, d'après lequel la grandeur prescrite du bloc est de 16 fois 16 points-image.

11. Procédé selon l'une des revendications 7 à 10, d'après lequel l'opération de comparaison est déterminée par :

$$|x_Y - h_Y| + |x_{Cr} - h_{Cr}| + |x_{Cb} - h_{Cb}| < S,$$

avec

$x_Y$    désignant une valeur de luminance des premières valeurs de couleur,

$x_{Cr}$    désignant une première valeur de chrominance des premières valeurs de couleur,

$x_{Cb}$    désignant une seconde valeur de chrominance des premières valeurs de couleur,

$h_Y$    désignant une valeur de luminance des secondes valeurs de couleur,

$h_{Cr}$    désignant une première valeur de chrominance des secondes valeurs de couleur,

$h_{Cb}$    désignant une seconde valeur de chrominance des secondes valeurs de couleur,

S    désignant la valeur de seuil prescrite.

**12.** Procédé selon l'une des revendications 7 à 10, d'après lequel l'opération de comparaison est déterminée par :

$$|x_Y - h_Y|^2 + |x_{Cr} - h_{Cr}|^2 + |x_{Cb} - h_{Cb}|^2 < S,$$

avec

$x_Y$    désignant une valeur de luminance des premières valeurs de couleur,

$x_{Cr}$    désignant une première valeur de chrominance des premières valeurs de couleur,

$x_{Cb}$    désignant une seconde valeur de chrominance des premières valeurs de couleur,

$h_Y$    désignant une valeur de luminance des secondes valeurs de couleur,

$h_{Cr}$    désignant une première valeur de chrominance des secondes valeurs de couleur,

$h_{Cb}$    désignant une seconde valeur de chrominance des secondes valeurs de couleur,

S    désignant la valeur de seuil prescrite.

**13.** Procédé selon l'une des revendications 7 à 10, d'après lequel l'opération de comparaison est déterminée par :

$$k_1 \cdot |D_1| + k_2 \cdot |D_2| + k_3 \cdot |D_3| < S,$$

avec

$k_1, k_2, k_3$    désignant des poids de pondération pouvant être prescrits,

$D_1$    désignant une première comparaison de la valeur de luminance des premières valeurs de couleur avec une valeur de luminance des secondes valeurs de couleur,

$D_2$    désignant une seconde comparaison d'une première valeur de chrominance des premières valeurs de couleur avec une première valeur de chrominance des secondes valeurs de couleur,

$D_3$    désignant une troisième comparaison d'une seconde valeur de chrominance des premières valeurs de couleur avec une seconde valeur de chrominance des secondes valeurs de couleur,

S    désignant la valeur de seuil prescrite.

**14.** Procédé selon l'une des revendications 1 à 13, d'après lequel le procédé de codage d'image basé sur des blocs est défini selon le standard MPEG-4, et le critère étant satisfait pour une zone pouvant être définie selon le standard MPEG-4.

**15.** Procédé selon l'une des revendications 1 à 14, d'après lequel la qualité d'image plus élevée est obtenue en définissant un taux de répétition d'image plus élevé pour la première zone.

**16.** Procédé selon l'une des revendications 1 à 15, d'après lequel la qualité d'image plus élevée est obtenue en définissant une résolution localisée plus élevée pour la première zone de façon telle que l'on traite un plus grand nombre de points-image pour la première zone.

**17.** Procédé selon la revendication 1, d'après lequel la commutation de la première valeur de quantification à la seconde valeur de quantification s'effectue par le fait qu'avec la seconde valeur de quantification est transmis un symbole DQUANT en tant que paramètre, et inversement la commutation de la seconde valeur de quantification à la première valeur de quantification s'effectue par le fait qu'avec la première valeur de quantification est transmis le symbole DOUANT en tant que paramètre.

**18.** Agencement pour le traitement d'image à l'aide d'une unité à processeur, qui est conçu de manière telle

     a) qu'une image numérisée soit subdivisée en deux zones, une première zone satisfaisant au critère d'une couleur prescrite, et une seconde zone ne satisfaisant pas à ce critère ;
     b) que la première zone soit traitée avec une qualité d'image plus élevée que celle de la seconde zone ;
     c) que la qualité d'image plus élevée soit obtenue moyennant une quantification de la première zone avec une première valeur de quantification et une quantification de la seconde zone avec une seconde valeur de quantification, la première valeur de quantification étant inférieure à la seconde valeur de quantification ;
d) que, lorsque le critère de la couleur prescrite est satisfait, l'on garantisse une zone continue sans interruption, la plus grande possible, qui comprend plusieurs blocs, présentant une couleur prescrite, notamment une couleur similaire à celle de la peau humaine, moyennant l'exécution de l'une des possibilités suivantes :

(1) si un bloc ne satisfait pas au critère de la couleur prescrite, ce bloc étant entouré de manière prépondérante par d'autres blocs qui satisfont au critère, ce bloc est également codé avec la première valeur de quantification lorsque pour lui le résultat d'une opération de comparaison entre la couleur du bloc considéré et la couleur prescrite se situe légèrement au-dessus d'une valeur de seuil prescrite, la comparaison de couleur s'effectuant sur la base de la luminosité, de la teinte et de la saturation de couleur ;
(2) si un bloc ne satisfait pas au critère de la couleur prescrite, ce bloc se situant au milieu de blocs qui satisfont au critère, ce bloc également est codé avec la première valeur de quantification.

# FIG 1

# FIG 2

EP 1 025 708 B1

# FIG 3

301 — vorgegebene Farbe = $COL_{HAUT}$ ($COL_H$)

302 — Block einlesen & Farbe bestimmen: = $COL_{BL}$

JA — Vergleichsoperation $|COL_H - COL_{BL}| < S$ — Nein

303

$COL_{BL}$ ist ähnlich der Hautfarbe $COL_H$

JA — Quantisierungswert QW = QW1 ? — 304

Nein

QW: = QW1 ! — 305

Quantisierungswert QW = QW2 ? — JA

307

Nein

308 — QW: = QW2 !

Quantisierung durchführen

306

QW1 < QW2

höhere Bildqualität

## FIG 4

## FIG 5